# EUROPÄISCHE PATENTANMELDUNG

(11) **EP 4 804 180 A1**
(43) Veröffentlichungstag der Anmeldung: **09.09.2026**
(21) Anmeldenummer: 25161801.3
(22) Anmeldetag: 05.03.2025
(51) Int. Cl.: G10K 11/168, B32B 5/24

(54) **AKUSTISCH WIRKSAMES FILTERMEDIUM**

(71) Anmelder: Sefar AG, 9410 Heiden (CH)
(72) Erfinder: Schindler, Lino, 9050 Appenzell (CH); Hofmann, Mira, 9473 Gams (CH)
(74) Vertreter: Wunderlich & Heim Patentanwälte PartG mbB

(57) **Zusammenfassung**

Die Erfindung betrifft ein akustisch wirksames Filtermedium, aufweisend ein Akustiktextil als Trägerschicht, und einen direkt auf einer Flächenseite des Akustiktextils applizierten offenporigen Schaum, wobei das Akustiktextil und der offenporige Schaum fest miteinander verbunden sind.

## Beschreibung

Die Erfindung betrifft ein akustisch wirksames Filtermedium, aufweisend ein Akustiktextil mit einem fest verbundenen offenporigen Schaum zur Verminderung bzw. Vermeidung von Störgeräuschen/Windgeräuschen.

Die Erhöhung der Sprachverständlichkeit ist essentiell für die Verarbeitung von menschlichen Sprachbefehlen bei digitalen Assistenten wie Smartphones, Freisprech-Headsets und Mikrofonen. Dabei stören Windgeräusche durch turbulente Strömungsverhältnisse im Außenbereich, insbesondere bei mobilen Geräten. Hybride Lösungen wie Konstruktionsmaßnahmen an der Hardware, stark dämpfende akustische Gewebe, sowie Software-Algorithmen zur Eliminierung der Windgeräusche aus einem Audiosignal werden heute zur Erhöhung der Sprachverständlichkeit eingesetzt. Neuere Systeme ergänzen fehlende, gefilterte Inhalte durch künstliche Intelligenz. Dafür sind leistungsfähige Prozessoren und Energie erforderlich, was insbesondere bei batteriebetriebenen, mobilen Geräten wie Headsets problematisch sein kann und letztendlich auch nur eine mehr oder weniger akkurate Rekonstruktion eines originalen Klangbilds sein kann.

Neben der Verbesserung der Sprachverständlichkeit dienen akustisch wirksame Filtermedien wie Gewebe auch dem mechanischen Schutz von Mikrofon und Lautsprecher. Hier ist insbesondere der Schutz gegen Wasser und Staub, ausgedrückt durch das I/P-Rating, zu nennen.

Auch akustisch wirksame Gewebe werden heute eingesetzt, um Windgeräusche bei Mikrofonen von mobilen Geräten zu minimieren. Bei akustischen Geweben besteht eine Abhängigkeit zwischen der geschlossenen Fläche, ausgedrückt durch den Luftdurchlasswert, und dem akustischen Widerstand. Der akustische Widerstand ist die reale Komponente der akustischen Impedanz, gemessen in akustischen Ohm. Akustische Gewebe mit einer niedrigen Impedanz haben einen hohen Luftdurchlasswert und umgekehrt. Anders ausgedrückt haben Gewebe mit einem hohen Luftdurchlasswert eine hohe offene Fläche und somit große Maschen- und Porenweiten.

Ein hoher akustischer Widerstand des Gewebes ist für die Dämpfung von Windgeräuschen gut geeignet, geht aber zwangsläufig mit hohen akustischen Verlusten, zum Beispiel am Mikrofon einher. Hinsichtlich des Schutzes gegen das Eindringen von Staub und Wasser sind sehr dicht gewebte Gewebe die bessere Wahl, da Schmutzpartikel an der Oberfläche des Gewebes gefiltert werden und sich die Wassersäule mit abnehmender Porengröße positiv verändert. Es ist daher wünschenswert, diese Verluste zu minimieren und gleichzeitig die Dämpfung der Windgeräusche beizubehalten oder zu verbessern.

Der Schallpegel am Mikrofon und die Intensität über das Frequenzband hängt dabei von vielen Faktoren ab, unter anderem auch der Geschwindigkeit der Strömung, der Geometrie des Gehäuseaufbaus oder der Dichte des absorbierenden Mediums. In der Regel erzeugen turbulente Strömungen mehr Geräusche als laminare Strömungen. Windgeräusche führen zu einer signifikanten Zunahme des Geräuschpegels insbesondere innerhalb des hörbaren Frequenzbereichs von 100 Hz bis 10 kHz.

Aus der WO 2017/176989 A1 ist eine Druckausgleichsanordnung für nicht-poröse Akustikmembranen bekannt, bei der der Druckausgleich parallel zu einer nicht-porösen Membran erfolgt. Hierbei wird ein offenporiger Polyesterschaumstoff mit unterschiedlichen Porengrößen und einer Dicke von 1 µm bis 200 µm auf eine nicht-poröse akustische Membran aufgetragen. Der Schaumstoff dient dabei lediglich als atmungsaktive Schicht.

Aus der DE 3614949 A1 ist ein Faservlies bekannt, auf das ein offenporiger Kunststoffschaum für Filterzwecke aufgebracht wird.

Aus der US 2017/0164084 A1 ist ein Mikrofonaufbau mit einem akustischen Entweichpfad bekannt, der ein barometrisches Ausgleichselement aufweist, welches aus mehreren Schichten besteht. Auf eine offenzellige Schaumschicht kann dabei eine weitere Schicht laminiert werden, welche direkt auf ein Mikrophon oder eine Membran aufgebracht ist. Es wird beschrieben, dass der Porendurchmesser der offenzelligen Schaumschicht einen definierten Grenzwert von 40 µm unterschreitet.

Die US2019/0268685 A1 zeigt den Aufbau eines Mikrofones, bei dem ein mehrschichtiger ineinander gesteckter Schaumkörper ohne Akustikgewebe verwendet wird.

Es ist **Aufgabe** der Erfindung, ein akustisch wirksames Filtermedium vorzuschlagen, das insbesondere hinsichtlich der akustischen Eigenschaften verbessert ist und in diesem Zusammenhang Störgeräusche/Windgeräusche verringert, ein Klangbild nicht stark beeinflusst, sowie Schutz gegen Umwelteinflüsse (Wasser/Staub) bietet.

Diese Aufgabe wird entsprechend der Erfindung, durch ein akustisch wirksames Filtermedium mit den Merkmalen des Anspruchs 1 gelöst.

Bevorzugte Ausführungen der Erfindung werden in den jeweiligen abhängigen Ansprüchen genauer ausgeführt.

Die Erfindung betrifft konkret ein akustisch wirksames Filtermedium, das ein Akustiktextil als Trägerschicht, und einen direkt auf einer Flächenseite des Akustiktextils applizierten offenporigen Schaum aufweist. Der offenporige Schaum ist vorzugsweise dadurch hergestellt, dass er als flüssige Schaumkomponenten auf das Akustiktextil aufgetragen wird und der Schaum sich direkt auf dem Textil bildet und aushärtet

Dadurch, dass die flüssigen Schaumkomponenten direkt auf das als Träger dienende Akustiktextil aufgetragen werden und der Schaum sich direkt auf dem Akustiktextil entwickelt, ist der Schaum ohne zusätzlichen Kleber mit dem Gewebe fest verbunden. Der offenporige Schaum umschließt das Akustiktextil zumindest teilweise. Es kann hierbei von einer form- bzw. kraftschlussähnlichen Verbindung gesprochen werden.

Bei dem Akustiktextil kann es sich um ein Gewebe, insbesondere aus Monofilamentfäden, ein Gewirk, ein Gelege, ein Gestrick, ein extrudiertes Flächengebilde, insbesondere extrudiertes Gewebe, ein Vlies oder eine Membrane handeln. Im Sinne der Erfindung kann unter Gewebe ein Flächengebilde verstanden werden, welches aus mindestens zwei Fadensystemen (Kette und Schuss) bestehen, die meist rechtwinklig miteinander verwebt werden. Ein Gewirk im Sinne der Erfindung ist eine Maschenware, bei der die Fäden in einem maschinellen Prozess so miteinander verbunden werden, dass eine dehnbare, elastische Struktur entsteht. Im Gegensatz zu Geweben werden die Fäden hier in einer kontinuierlichen Schleifenbildung miteinander verkettet. Auch Gestricke sind ebenfalls Maschenwaren, unterscheiden sich aber von Gewirken dadurch, dass sie durch das Stricken (z. B. maschinell oder von Hand) hergestellt werden. Die Fäden bilden Maschen in einer einzigen Richtung (meist quer), was zu hoher Elastizität führt. Ein Gelege nach dem Verständnis der Erfindung ist ein textiles Flächengebilde, das aus parallel ausgerichteten Fäden besteht, die punktuell oder durch Bindefäden fixiert werden. Als extrudiertes Flächengebilde können Flächengebilde bezeichnet werden, die durch Extrusion hergestellt werden, bei der Polymere durch Düsen gepresst werden.

Extrudierte Gewebe können hergestellt werden, in dem in einen extrudierten Schlauch durch eine werkzeugtechnische Ausführung in regelmäßigen Abständen Perforationen eingebracht werden, so dass eine Gitterstruktur ausgebildet wird.

Diese Materialien sind oft sehr robust und widerstandsfähig. Ein Vlies wiederum ist ein ungewebtes textiles Flächengebilde, bei dem Fasern durch mechanische, thermische oder chemische Prozesse miteinander verbunden werden. Es zeichnet sich durch eine zufällige oder gerichtete Faseranordnung aus und wird oft in Filtern, Hygieneprodukten oder Isolationsmaterialien verwendet. Eine Membran wiederum kann eine dünne, flexible Schicht sein, die oft aus Polymermaterialien besteht. Sie kann wasserundurchlässig, atmungsaktiv oder porös sein.

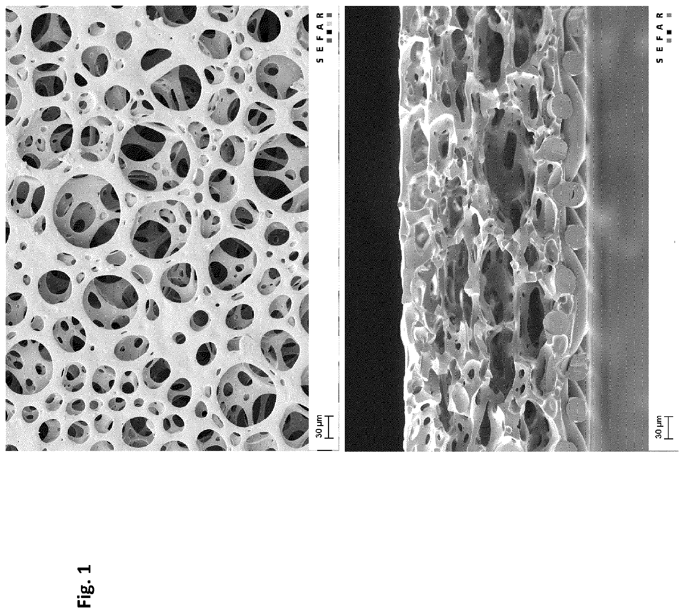

Die offenporige Struktur der Schaumschicht des akustisch wirksamen Filtermediums erreicht durch die komplexen Strukturen und Verwinkelungen - im Vergleich zu dem Akustikgewebe allein - eine effiziente Dämpfung von störenden Windgeräuschen im betreffenden Frequenzbereich durch eine wirksame Reduzierung der Luftturbulenzen (siehe auch die vergrößerten Darstellungen des erfindungsgemäßen Filtermediums in Fig. 1 weiter unten). Absorption, Reflexion und die vergrößerte Oberfläche führen zur Reduktion und Vergleichmässigung der Strömung durch das Filtermedium.

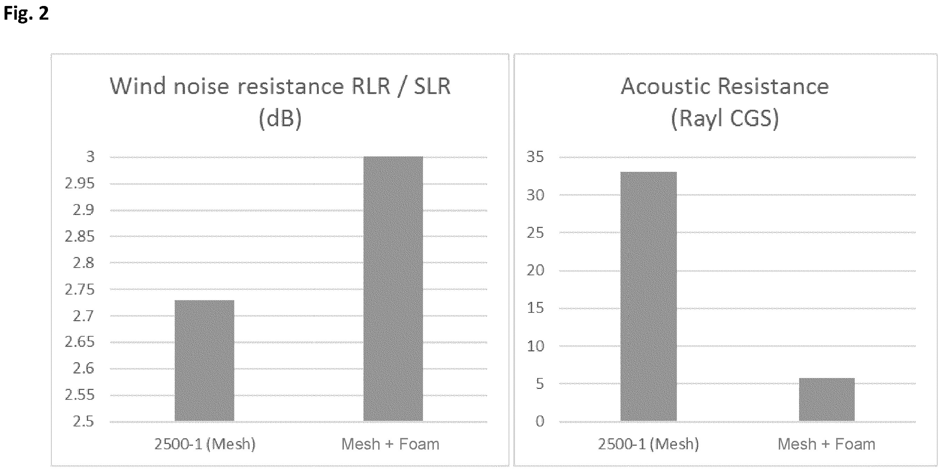

Während Gewebe allgemein als 2-dimensionale Struktur angesehen werden können, verhält sich der Schaum 3-dimensional. Bei dichten akustischen Geweben sind die Anzahl und Größe der Poren aufgrund der webtechnischen Parameter und der eingesetzten Garne berechenbar und bestimmt. Bei den Schaumstoffporen gibt es kombinierte Effekte: kleinere Öffnungen führen zu einem höheren Widerstand, aber gleichzeitig führen mehr parallele Öffnungen zu einem geringeren akustischen Widerstand. Die Fig. 2 zeigt auf der rechten Seite den akustischen Widerstand in kOhm (Rayl CGS) im Vergleich zwischen einem relativ dichten Sefar Akustikgewebe 2500-1 BSY ohne offenporige Schaumschicht und dem erfindungsgemäßen akustisch wirksamen Filtermediums, bestehend aus einem Akustikgewebe mit einem fest verbundenen offenporigen Schaum.

Der signifikant geringere akustische Widerstand des erfindungsgemäßen akustisch wirksamen Filtermediums kann über das gesamte Frequenzspektrum dargestellt werden. Im tieferen Frequenzbereich spielt es keine Rolle, ob ein akustisch wirksames Filtermedium oder ein Gewebe eingesetzt wird. Effektive Dämpfungen im tieferen Frequenzbereich müssen durch dichtere und oder dickere Materialien bewerkstelligt werden. Im höheren Frequenzspektrum zeigt der geringere akustische Widerstand die in Fig. 2 dargestellten Unterschiede.

Zur Bestimmung der Verbesserung von Windgeräuschen bei Mikrofonen bietet sich die ITU-T Rec.P.79 (11/2007) der International Telecommunication Union, «Calculation of loudness ratings for telephone sets» an, insbesondere die Berechnung für den SLR Wert (Sending Loudness Rating) an. $SLR = - 57 , 1 {log}_{10} {\sum }_{i}^{N} {10}^{\left(\frac{1}{57 , 1}\right) \left({S}_{UMJ}-{W}_{s}\right)}$

Die Berechnung der Differenz SLR (Akustikgewebe mit Schaum) gegen die Referenz SLR (nur Akustikgewebe) gibt Auskunft über die Verbesserung der Windgeräusche. Die Fig. 2 linke Seite stellt das Ergebnis für die erfindungsgemäße Schaumbeschichtung im Vergleich zu einem Akustikgewebe 2500-1 BSY ohne Schaumschicht dar.

Mit der Berechnung der Differenz sind hohe dB Werte erstrebenswert und stellen eine bessere Dämpfung der Windgeräusche dar.

In der Auswertung hinsichtlich des erfindungsgemäßen akustisch wirksamen Filtermediums konnte die Überlegenheit der Kombination gegenüber einem sehr dichten Akustikgewebe ohne Schaumschicht gezeigt werden.

Bei der Kombination aus Akustikgewebe und offenporigen Schaum (d.h dem akustisch wirksamen Filtermediums) liegt der akustische Widerstand vorzugsweise zwischen 2 kOhm (CGS) und 20 kOhm (CGS). Gleichzeitig liegt der Windgeräusch-Widerstandskoeffizient vorzugsweise bei über 2,5 dB. Der akustische Widerstand beträgt nicht mehr als 10 kOhm (CGS), während der Windgeräusch-Widerstandskoeffizient nahe bei 3 dB liegt. Zusätzlich ist der SPL Verlust bei hohen Frequenzen am geringsten.

Der Vorteil der Kombinationen aus akustischem Gewebe und offenporigen Schaum (d.h. dem akustisch wirksamen Filtermediums gegenüber einfachen Lagen von Geweben bei der Reduzierung von Windgeräuschen ist messbar, aber ggf. nicht sehr ausgeprägt. Der entscheidende Vorteil der Erfindung liegt allerdings darin, dass bei geringfügig besserer Windgeräuschdämpfung der akustische Widerstand deutlich geringer ist und damit das Klangbild weniger stark beeinflusst wird.

Das erfindungsgemäße akustisch wirksame Filtermedium ist vorzugsweise dadurch weiter gekennzeichnet, dass die Schichtdicke des offenporigen Schaums von 10 bis 200 µm beträgt und ein Verhältnis von Schaumdicke zu Gesamtdicke in einem Bereich von 0,15 bis 0,9 liegt. Die geringe Schichtdicke ermöglicht den Einsatz bei hochintegrierten, mobilen Geräten wie Smartphones oder Headsets.

Vorzugsweise beträgt eine Porengröße des offenporigen Schaums 1 bis 18 µm, bevorzugt 8 bis 18 µm, und eine mittlere Porengröße beträgt vorzugsweise von 10 bis 14 µm.

Vorzugsweise liegt ein Luftdurchlass des akustischen, nicht beschichteten Gewebes oder andere Textilen in einem Bereich von 60-10300 Liter/m²s bei 200 Pa Druckdifferenz.

Vorzugsweise ist der Schaum ein atmungsaktiver, offenporiger Schaum, vorzugsweise auf Basis von Polyurethan, Acrylaten, Silikon, anderer Polymere oder Kombinationen davon. Das Akustiktextil als der Träger ist vorzugsweise ein Monofilament-Gewebe, vorzugsweise ein einlagiges Gewebe mit einer Maschenweite von 3 bis 120 µm.

Vorzugsweise beträgt das Schaumlitergewicht ca. 100 - 400 g/Liter, vorzugsweise 140-200 g/Liter.

Vorzugsweise umfasst die Herstellung einen Prozessschritt, bei dem das Filtermedium nach dem Applizieren des Schaums getrocknet, bzw. getrocknet und ausgehärtet wird.

Die Erfindung wird im Folgenden anhand der beigefügten Zeichnung sowie einem Beispiel eines erfindungsgemäßen akustisch wirksamen Filtermediums erläutert. Es zeigen:
- Fig. 1: eine Draufsicht auf die Schaumschicht (oben), und eine Querschnittsansicht des Verbunds aus Akustikgewebe und Schaumschicht (unten);
- Fig. 2: die Verbesserung des Wind-Noise-Verhaltens in dB ("Sending Loudness Rating" - SLR-Verfahren) sowie den durchschnittlichen akustischen Widerstand im Vergleich zwischen einem einem Akustikgewebe 2500-1 BSY ohne Schaumschicht und einem Akustikgewebe mit Schaumschicht gemäß Protokoll ASTM C522-2009

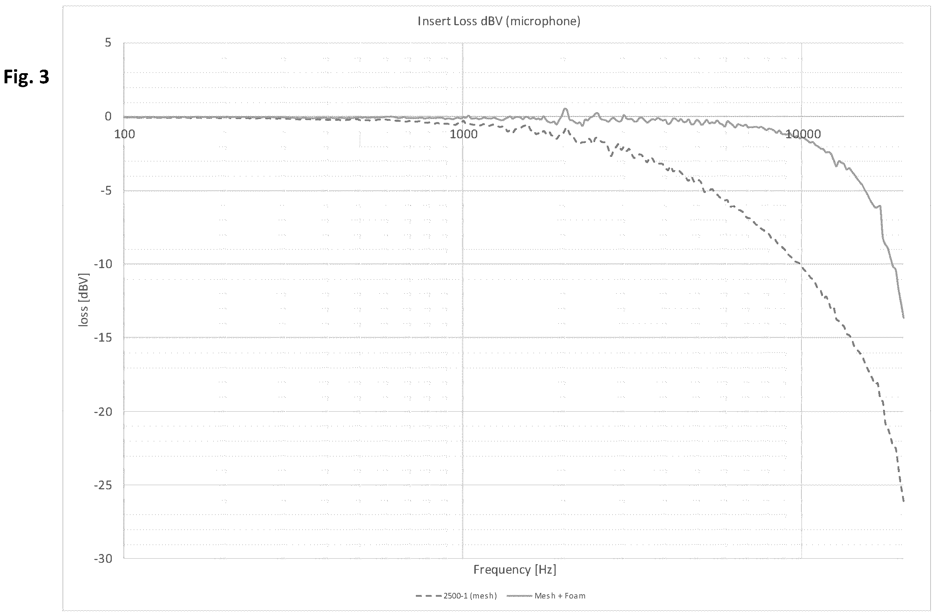

- Fig. 3: den Verlust eines erfindungsgemäßen akustisch wirksamen Filtermedium (mesh #7) im Vergleich zu einem Akustikgewebe ohne Schaumschicht über dem relevanten Frequenzbereich von 100 Hz - 10kHz

Im folgendem wird ein erfindungsgemäßes akustisch wirksames Filtermedium näher betrachtet, bei dem ein Akustikgewebe vom Typ Sefar Acoustic 75-25 als Trägerschicht verwendet wurde und ein offenporiger Schaum direkt auf einer Flächenseite des Akustikgewebes appliziert wurde. Das Akustikgewebe Sefar Acoustic 75-25 weist eine Maschenweite von 25 µm, einen Garndurchmesser von 27 µm, einen Luftdurchlass von 2300 Liter/m²s und eine Akustische Impedanz von 75 Rayl (MKS) auf.

Die Fig. 1 zeigt das erfindungsgemäße akustisch Filtermedium jeweils in einer Draufsicht auf die Schaumschicht (oben) und in einer Querschnittsansicht des Verbunds aus Akustikgewebe und Schaumschicht (unten).

Das hier betrachtet und weiter analysierte akustisch wirksame Filtermedium weist eine Dicke von ca. 260 µm, ein Gewicht von 70 g/m² und eine Porengröße MFP von 12 µm auf.

Bei einem Vergleich der Luftdurchlässigkeit und des Strömungswiderstands liegt das analysierte Akustikfiltermedium 210 l/m²/s Luftdurchlässigkeit und 957 Raylₘₖₛ.Strömungswiderstand. Klassische Akustikgewebe weisen hierbei Werte zwischen 125 l/m²/s und 60 l/m²/s Luftdurchlässigkeit bei 1600 Raylₘₖₛ bis 3400 Raylₘₖₛ.Strömungswiderstand auf.

Der Windgeräuschewiderstand (wind noice resistance, RLR) liegt für das erfindungsgemäße Akustikfiltermedium bei etwa 3dB und der akustische Widerstand (CGS) bei etwa 8 kOhm.

Hierbei können die Poren des offenporigen Schaums wie folgt charakterisiert werden:

| | maximale Porengröße (µm) | durchschnittliche Porengröße (µm) | minimale Porengröße (µm) | Bubble Point Pressure Porometer (bar) PB3 | Bubble Point Flow Rate Porometer (l/m) PB4 |
|---|---|---|---|---|---|
| oben | 17,4 | 13,8 | 8,1 | 0,0258 | 0,0018 |
| unten | 16,9 | 13,6 | 8,4 | 0,0265 | 0,0069 |

Hierbei bezeichnet "oben" und "unten" die Lage des Schaums hinsichtlich des Stützsiebes der Messapparatur, d.h. bei "oben" war der Schaum durch das Gewebe vom Stützsieb getrennt, wohingegen bei "unten" der Schaum in direktem Kontakt mit dem Stützsieb war.

## Patentansprüche

**1.** Akustisch wirksames Filtermedium, aufweisend
ein Akustiktextil als Trägerschicht, und
einen direkt auf einer Flächenseite des Akustiktextils applizierten offenporigen Schaum.

**2.** Akustisch wirksames Filtermedium, gemäß Anspruch 1,
**dadurch gekennzeichnet,**
**dass** das Akustiktextil und der offenporige Schaum fest miteinander verbunden sind, wobei der offenporige Schaum das Akustiktextil zumindest teilweise umschließt.

**3.** Akustisch wirksames Filtermedium gemäß Anspruch 1 oder 2,
**dadurch gekennzeichnet,**
**dass** das Akustiktextil ein Gewebe, insbesondere aus Monofilamenten, ein Gewirk ein Gelege, ein Gestrick, ein extrudiertes Flächengebilde, ein extrudiertes Gewebe, ein Vlies oder eine Membrane ist.

**4.** Akustisch wirksames Filtermedium gemäß einem der Ansprüche 1 bis 3,
**dadurch gekennzeichnet,**
**dass** der offenporige Schaum dadurch hergestellt ist, dass er als flüssige Schaumkomponente auf das Akustiktextil direkt über einen Spalt aufgetragen und ausgehärtet wurde.

**5.** Akustisch wirksames Filtermedium gemäß einem der Ansprüche 1 bis 4,
**dadurch gekennzeichnet,**
**dass** eine Schichtdicke des offenporigen Schaums 10 bis 200 µm beträgt.

**6.** Akustisch wirksames Filtermedium gemäß einem der Ansprüche 1 bis 5,
**dadurch gekennzeichnet,**
**dass** eine Porengröße des offenporigen Schaums 1 bis 18 µm beträgt, und eine mittlere Porengröße vorzugsweise 10 bis 14 µm beträgt.

**6.** Akustisch wirksames Filtermedium gemäß einem der Ansprüche 1 bis 5,
**dadurch gekennzeichnet,**
**dass** ein Verhältnis von Schaumdicke zur Gesamtdicke in einem Bereich von 0,15 bis 0,9 liegt.

**7.** Akustisch wirksames Filtermedium gemäß einem der Ansprüche 1 bis 6,
**dadurch gekennzeichnet,**
**dass** ein Luftdurchlass des akustischen, nicht beschichteten Akustikgewebes in einem Bereich von 60-10300 Liter/m²s bei 200 Pa Druckdifferenz, vorzugsweise von 80 bis 350 Liter/m²s beschichtet, liegt.

**8.** Akustisch wirksames Filtermedium gemäß einem der Ansprüche 1 bis 7,
**dadurch gekennzeichnet,**
**dass** der Schaum ein offenporiger Schaum ist, vorzugsweise auf Basis von Polyurethan, Acrylatn, Silikon, aderen Polymeren oder Kombinationen davon.

**9.** Akustisch wirksames Filtermedium gemäß einem der Ansprüche 1 bis 8,
**dadurch gekennzeichnet,**
**dass** das Akustiktexil ein Monofilament-Gewebe ist, vorzugsweise ein einlagiges Gewebe mit einer Maschenweite von 3 bis 120 µm.

**10.** Akustisch wirksames Filtermedium gemäß einem der Ansprüche 1 bis 9,
**dadurch gekennzeichnet,**
**dass** das Akustiktextil eine hydrophobe Oberflächenmodifikation aufweist.

**11.** Akustisch wirksames Filtermedium gemäß einem der Ansprüche 1 bis 10,
**dadurch gekennzeichnet,**
**dass** der akustische Widerstand des akustisch wirksamen Filtermedium von 2kOhm (CGS) bis 20 kOhm (CGS) beträgt.
